# EUROPEAN PATENT APPLICATION

(11) **EP 4 202 817 A1**
(43) Date of publication of application: **28.06.2023**
(21) Application number: 21861817.1
(22) Date of filing: 31.03.2021
(51) Int. Cl.: G06Q 30/06, A45D 29/00, G06Q 30/02, G06Q 50/10

(54) **NAIL ART MANAGEMENT PLATFORM HAVING PRINTABLE NAIL ART PAPER SUPPLY STRUCTURE**

(30) Priority: 24.08.2020 KR 20200106147
(71) Applicant: Lee, Kwang-Kwon, Gwangju-si, Gyeonggi-do 12747 (KR)
(72) Inventor: Lee, Kwang-Kwon, Gwangju-si, Gyeonggi-do 12747 (KR)
(74) Representative: Banse & Steglich Patentanwälte PartmbB
(86) International application number: PCT/KR2021/003985
(87) International publication number: WO 2022/045514

(57) **Abstract**

The present invention relates to a nail art managing platform capable of supplying a printable nail art paper. A platform for managing a nail art comprises a nail art managing server 11 for managing a process of supplying a nail art; a supply managing group for communicating with the nail art managing server 11, for contacting a consumer directly, for selling the nail art or handling goods related to the nail art; and a nail art supplying group for supplying the nail art to the consumer in a printable file form, supplying a printed nail art, or supplying things related to the nail art to the consumer or the shop.

## Description

### BACKGROUND OF THE INVENTION

### 1. Field of the Invention

The present invention relates to a nail art managing platform capable of supplying a printable nail art paper, in particular the platform capable of supplying the nail art paper for printing a nail art with a general printer and managing a shop related to the nail art.

### 2. Description of the Related Art

An artificial nail may become a kind of a nail art to present a nail aesthetically or artistically, and the artificial nail may be made of a polymer stuff or a natural stuff. The artificial nail may be adhered on a nail with a glue, for example, the artificial nail may be adhered on the nail by a both side adhesive tape. The nail art may be performed personally or on a shop for the nail art in a way to decorate the nail. But the nail art may be made in a form of a sticker according to a development of a printing technic, and a nail art design printed on a printing paper may be supplied to a customer. Such a nail art may have an advantage that the customer may buy the nail art easily for adhering the nail art on the nail and the customer can remove the nail art in convenient time. The sticker type of the nail art may be bought personally or may be sold at a nail art shop or with a vending machine. And a nail art design can be chosen by the customer. The Korea patent publication number 10-2020-0009811 discloses a system for selling a nail art automatically using an augmented reality image. The nail art may be utilized in various ways, and it is necessary to supply to a consumer in various ways. And the various methods for supplying the nail art need to be managed by a proper system. The known skill in this art describes an automatic selling method, but the known skill does not describe a skill related to a nail art paper printed by a general print or a method for managing a nail art shop effectively.

The present invention has a purpose as below for solving the known skill.

### PURPOSE OF THE INVENTION

The purpose of the present invention is to provide with a nail art managing platform capable of supplying a nail art paper printable with a general printer and capable of managing various types of shops related to the nail art.

### SUMMARY OF THE INVENTION

In one embodiment of the present invention, a platform for managing a nail art comprises a nail art managing server for managing a process of supplying a nail art; a supply managing group for communicating with the nail art managing server, for contacting a consumer directly, for selling the nail art or handling goods related to the nail art; and a nail art supplying group for supplying the nail art to the consumer in a printable file form, supplying a printed nail art, or supplying things related to the nail art to the consumer or the shop.

In other embodiment of the present invention, the nail art managing server supplies a nail art paper capable of being printed, and the nail art paper may comprise a polyurethane layer and a nail art design may be printed on the paper with a general printer by the consumer.

In another embodiment of the present invention, the platform comprises a location/service information module for supplying an information related to each nail art shop.

The nail art managing platform capable of supplying a nail art paper according to the present invention enables a consumer to print a nail art design on the supplied nail art paper with a general printer. Accordingly, the consumer can choose various nail art according to personal taste. The platform according to the present invention can supply the nail art in various ways. And also, the platform according to the present invention can make the nail art provide to the consumer his or her own selection, thereby the convenience for supplying the nail art can be enhanced. And also, the selection range of the consumer can get larger by providing an information related to a shop treating the nail art and by providing an advertisement in a course of providing the nail art, if necessary. Various nail arts can be provided to the consumer according to the present invention, not limited to.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 shows an embodiment of a nail art managing platform capable of supplying a nail art paper according to the present invention.
FIG.2 shows an embodiment of a nail art paper by the platform according to the present invention.
FIG. 3 shows an embodiment for providing a nail art in a form of printing according to the present invention.
FIG. 4 shows an embodiment for providing a nail art by a vending machine according to the present invention.
FIG. 5 shows an embodiment for managing a nail art shop by the platform according to the present invention.

### DETAILED DESCRIPTION OF EXEMPLARY EMBODIMENTS

Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on intension and usage. That is, the terms used herein must be understood based on the descriptions made herein.

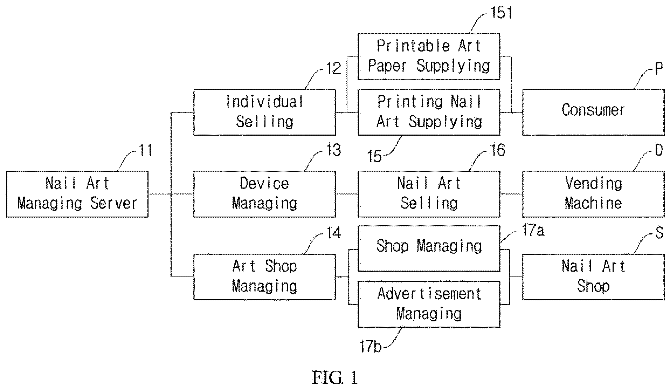

FIG.1 shows an embodiment of a nail art managing platform capable of supplying a nail art paper according to the present invention.

Referring to FIG.1, a platform for managing a nail art comprises a nail art managing server 11 for managing a process of supplying a nail art; a supply managing group for communicating with the nail art managing server 11, for contacting a consumer directly, for selling the nail art or handling goods related to the nail art; and a nail art supplying group for supplying the nail art to the consumer in a printable file form, supplying a printed nail art, or supplying things related to the nail art to the consumer or the shop. The nail art may be made in a form of a sticker adhered on a fingernail or a toenail or in a form of a nail, and the nail art can be provided in a form to be adhered on the fingernail or the toenail. The nail arts with various shapes may be supplied in way suitable to the shapes, the nail art managing server 11 can manage processes of supplying various nail arts. In particular, the nail art managing server 11 can provide each nail art to a consumer directly, provide through an unmanned vending machine or provide to nail art shops. The supply managing group for supplying the nail arts may be prepared for supplying various nail arts. The supply managing group may comprise an individual selling module 12 for managing an on-line sale of the nail art such as an internet mail order; a device managing module 13 for installed at various places and selling the nail art in a way of an unmanned vending machine 13; or an art shop managing module 14 for providing various services related to the nail art to the consumer. The nail art managing server 11 can manage each module 12, 13, 14 comprised in the supply managing group to supply the nail art or the service related to the nail art in proper way. The supply managing group can provide the nail art or the service related to the nail art through the nail art supplying group, and the nail art supplying group a printing nail art supplying unit 15 for supplying the nail art to each consumer P; a nail art selling unit 16 for providing various services related to the nail and monitoring an operating condition; and a shop managing unit 17a providing an information related to the nail art shop S supplying various services related to the nail art and providing the nail art to the nail art shop S, if necessary. The printing nail art supplying unit 15 can supply a printed nail art or a printable nail art. In particular, an artificial nail with a size of each fingernail or each toenail may be made for selling as the printed nail art, and the consumer can adhere each artificial nail on each fingernail or each toenail directly. The printable art paper supplying unit 151 can supply a printing paper that can be printed by a general printer such as a home printer, an office printer and the like. The printing paper may be made from a polymer stuff such as a polyurethane, and the printing paper may have a size of A4 paper. The consumer can buy the printing paper, and the consumer can select various nail patterns to print the nail art on the paper with a general printer. And the nail art printed by the consumer can be adhered on a fingernail or a toenail of the consumer. The printing paper may be made in various forms as various stuffs to provide to the consumer. The shop managing unit 17a may store information related to the nail art shops S located at various places, and the shop managing unit 17a can provide the information related to the shops S to the consumer. And also, an advertising unit 17b may be installed to provide the consumer P, if each shop S requires a shop advertisement. The nail art managing server 11 can provide various nail arts and various services to the consume in various ways, not limited to.

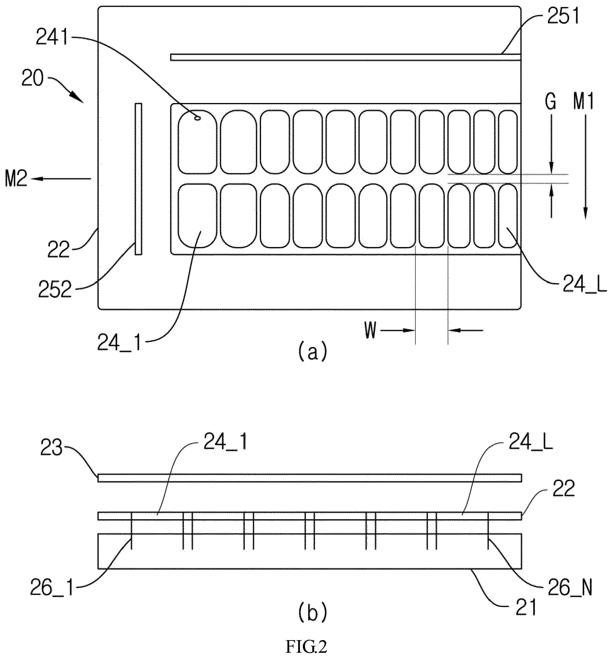

FIG.2 shows an embodiment of a nail art paper by the platform according to the present invention.

Referring to FIG.2, the nail art paper 20 may have a size capable of being printed by a general printer such as A4 paper. The nail art paper 20 may comprise a base layer 21; a printing layer 22 formed above the base layer 21; and a protecting layer 23 for protecting the printing layer 22 and removed possibly from the printing layer 22. Various nail pattern 24_1 to 24_L to be printed may be formed on the printing layer 22 as a two dimensional matrix shape. Each nail pattern 24_1 to 24_L may be adhered in a removable form on the base layer 21. Each nail pattern 24_1 to 24_L may have a rectangular shape wherein two short sides face to face has curved lines, and each nail pattern 24_1 to 24_L may have a proper size for being adhered on the fingernail or the toenail. Each nail pattern 24_1 to 24_L has an identical to or a similar to each other in the embodiment of FIG.2, but each nail pattern 24_1 to 24_L may have a different shape or size according to the shape or size of each fingernail or toenail. For example, a shape of one nail pattern 24_1 to 24_L adhered on a thumb fingernail may be different from that of the other pattern 24_1 to 24_L adhered on a little fingernail. And also, a shape of one nail pattern 24_1 to 24_L adhered on a toenail may be different from that of the other nail pattern 24_1 to 24_L A pattern printed on each nail pattern 24_1 to 24_L may be made as various shapes, and the nail patterns 24_1 to 24_L on adhered on an identical fingernail may have an identical shape or different shapes. A print initiating position may be determined in advance for printing nail designs of nail patterns 24_1 to 24_L formed on the printing layer 22. A width reference line 251 and a length reference line 252 may be formed on the printing layer 22. And also, a separating width W and a row distance G between different nail patterns 24_1 to 24_L may be determined in advance. Such information for printing may be transferred to a general printer, and the printer may move a cartridge from direction to other direction based on the transferred information for printing each nail design of each nail art pattern 24_1 to 24_L Referring to (b) of FIG.2, the art paper 20 may comprise a base 21 layer made of a polymer stuff; and a printing layer 22 coupled on the base layer 22 in a removable form. And separating lines 26_1 to 26_N vertical to the base layer 21 may be formed to cut a portion of the base layer 21. The separating lines 26_1 to 26_N may form borders of each pattern 24_1 to 24_L, and each nail pattern 24_1 to 24_L may be separated from the base layer 21 along the separating lines 26_1 to 26_N. The separating lines 26_1 to 26_N may be formed before or after printing the nail pattern 24_1 to 24_L, preferably may be formed after printing the nail pattern 24_1 to 24_L. The separating lines 26_1 to 26_N may be formed with the depth becomes a portion of the total thickness of the base layer 21, for example the depth may become 1/10 to 4/5 of the total thickness of the base layer 21, not limited to. The protecting layer 23 may be laminated on the printing layer 22, and the protecting layer 23 may protect the printing stuff before printing, therefore the protecting layer 23 may be made of various materials with a property capable of being separated from the printing layer 22. For example, the protecting layer 23 may be made of a polymer and may have a weak adhering force and an impermeable the light and a moisture. A design may be printed on the printing paper 20 by a general printer in a similar or identical way as the design is printed on a paper. Therefore, the base layer 21 and the printing layer 22 need to be made of a material with a property not to be rolled, not to be separated, not to be torn or not to be deformed in a printing process. And also, the material for the base layer 21 or the printing layer 22 may have a proper friction. And the printing layer 22 may be made of material not to deform a design and not to be smeared in a printing process. For example, the printing layer 22 may comprise silica with an average diameter of 10 to 200 nm, for example, the printing layer 22 may be made of a polymer with decomposition temperature above 270 °C, preferably a polyurethane. And also, the separating layer 24 may be made of the polymer, preferably the polyurethane with 50 to 90 HV hardness; 150 to 300 kgf/cm² tensile strength; 300 to 400 % elongation at 150 °C temperature; 50 to 120 mm³loss Din abrasion. An adhesive for preventing the base layer 21 from being separated from the base layer 21 in a printing process may comprise silica particles with an average diameter of 10 to 200 nm, and the adhesive may be made of a polymer or a polyurethane and may have a 300 to 520 kPa initial adhering force, a volume expansion rate below 250 % at the 150 °C temperature. The base layer 21 may be a polymer material identical to or similar to the material for the printing layer 22, and the thickness and the hardness of the base layer 21 may become larger than those of the printing layer 22. For example, a thickness of the base layer 21 may become 2 to 20 times to that of the printing layer 22, not limited to. Various inks may be used for printing the decoration or the design, for example, an ink may be used advantageously with a property having a high thermal stability, a quick hardening and an anti-smear. For example, the ink for printing the nail pattern 24_1 to 24_L may comprise a pigment, a resin, a solvent and an additive. And the pigment may become an organic pigment such as a diazo, and the resin may comprise an acrylic, an epoxy, a cellulose derivative, a poly imide or a hydrocarbon, preferably an isocyanate free polyurethane. The solvent may comprise an ethyl acetate, an isopropanol or an n-propyl acetate, and the additive may comprise a cyclohexanone, a butoxyethanol or a butyrolactone. As discussed above, the printing layer 22 may comprise a silica component, and the ink for the printing layer 22 may comprise 0.01 to 1.0 wt% silica to the total ink for enhancing a printing property. And the average diameter of the silica for the ink composition may have a similar to that of the printing layer 22. The art paper 20 may comprise the base layer 21 and the printing layer 22 made of various material, and the various kind of decorations or designs can be printed on the printing layer 22. And each nail pattern 24_1 to 24_L of the printing layer 22 can be separated from the base layer 21 after printing.

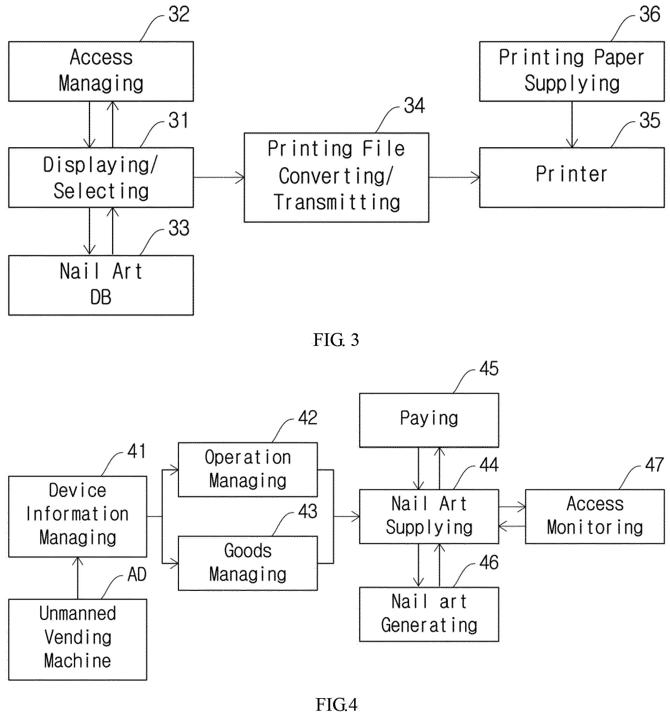

FIG. 3 shows an embodiment for providing a nail art in a form of printing according to the present invention.

Referring to FIG.3, a displaying and selecting module 31 may be formed for providing the nail art to each consumer. The consumer can be access to the displaying and selecting module 31 through an access managing module 32, and the access managing module 32 may approve the access of the consumer to access to the displaying and selecting module 31 through a portable mobile device or an electronic device. The displaying and selecting module 31 may provide various kinds of nail arts to the consumer accessing through the access managing module 32 in a way to display the nail arts on a screen. The consumer can select at least one nail art among the nail arts displayed on the screen for ordering. A nail art database 33 may be installed, and various kinds of nail arts may be stored in the nail art database 33. The nail arts stored in the nail art database 33 may include nail arts permitted to use copyrighted material. The displaying and selecting module 31 may display various kinds of nail arts stored in the nail art database 33 on the screen, and the consumer can select at least one nail art for ordering. The nail art may be delivered to the consumer in a form of adhering on the spot according to the order. And also, the nail art design may be transmitted to the consumer in a form of a file capable of being printed by the general printer. The nail art file transmitted to the consumer can be printed by various kinds of general printers. The printer 35 may become a home printer or an office printer used in general. A printing paper may be supplied to the printer 35 by a printing paper module 36, and the nail art file transmitted to the consume may be printed on the printing paper. The printing paper may be made of a polyurethane, a polyester or an acrylic resin, and the printing paper. The printing paper may have an A4 size, and the printing paper may have a plurality of cutting parts. Printing parts in the printing paper made of the polymer material may be determined in advance. The transmitted printing file may have a function to detect the printing paper, for example, the printing file may check whether the printing paper is made of a predetermined polymer material or whether the printing paper has parts for printing and separating lines surrounding the parts. The printing paper may be supplied to the consumer in advance, and the printing paper may be verified as an identifying code such as a QR (quick response) code. If the printing paper identified by the printing file is supplied to the printer, then a printing way is transmitted from the printing file to the printer for printing the nail art on the printing paper. When the nail art is printed on the printing paper, the consumer may separate each nail art from the printing paper along the separating lines to adhere the nail art on the fingernail or the toenail. The printing paper may be supplied through various ways, not limited to.

FIG. 4 shows an embodiment for providing a nail art by a vending machine according to the present invention.

Referring to FIG.4, the nail art may be sold by an unmanned vending machine AD, and the vending machine AD may be installed at a place where people can use the machine easily. A device information managing module 41 may be installed for managing the vending machine. The device information managing module 41 may store the information related to the vending machines AD installed at various places, and the device information managing module 41 may monitor an operating condition of each vending machine AD in real time. The unmanned vending machine AD may be connected to the device 41 via a wire or wireless communication, and the device information managing module 41 can manage the operation of the vending machine AD through an operation managing module 42 and a goods managing module 43. The operation condition of each vending machine AD can be monitored by the operation managing module 42, for example, an operating condition, a selling state and an operating environment may be monitored by the operation managing module 42. And also, the operating managing module 42 may store the operating condition in real time, and a required action may be taken if the vending machine AD is operating in an improper way. The goods managing module 43 may be installed, and nail arts supplied to each vending machine AD may be managed by the goods managing module 43. The goods managing module 43 can check the goods situation of each vending machine, if necessary, the goods managing module 43 may supply the goods to the vending machine AD. A nail art supplying module 44 may be installed at the vending machine AD, and also the vending machine AD may comprise a nail art generating module 46. A sticker type of a nail art or an artificial type of a nail art may be sold through the vending machine AD, and the nail art supplying module 44 may comprise a screen and an inputting means to be used by the consumer. And also, the vending machine AD may comprise various paying means 45, and the consumer may pay in various ways through the paying means 45. An access monitoring module 47 such as a camera may be installed, and the vending machine AD may be protected by the access monitoring module 47. For example, the access monitoring module 47 may comprise a CCTV, and the access monitoring module 47 may be transmitted the abnormal operating condition to the device information managing module 41 if the vending machine AD operates in abnormal way. Various kinds of nail arts can be sold by the unmanned vending machine AD, and the vending machine AD can supply the nail art to the consumer in various ways.

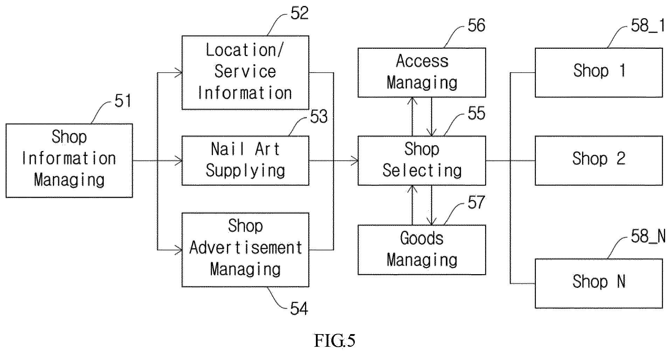

FIG. 5 shows an embodiment for managing a nail art shop by the platform according to the present invention.

Referring to FIG.5, the platform may comprise a location/service information module 52 for supplying an information of each nail art shop 58_1 to 58_N. Various art types of services may be supplied by various nail art shops 58_1 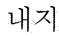 58_N. A shop information managing module 51 for supplying information related to the nail art shops 58_1 to 58_N and for supplying the nail art to the nail art shops 58_1 to 58_N, if necessary, may be installed. The shop information managing module 51 may control the location/service information module 52; a nail art supplying module 53; and a shop advertisement managing module 54 for managing each nail art shop 58_1 to 58_N. The location/service information module 52 may store a location information of each nail art shop 58_1 to 58_N and a service information supplied by each nail art shop 58_1 to 58_N to provide a required information to the consumer accessing the shop information managing module 51. For example, the location/service information module 52 may store the location information or the service information of each nail art shop 58_1 to 58_N to supply a homepage information or a contacting information to the consumer. The nail stick, the artificial nail or various goods related to the nail art may be supplied to each nail art shop 58_1 to 58_N by the nail art supplying module 53. And also, an advertisement related to each nail art shop 58_1 to 58_N may be expose to the consumer by the shop advertisement managing module 54. A shop selecting module 55 may be installed for managing the nail art shop 58_1 to 58_N, the consumer may access at least one nail art shop 58_1 to 58_N by accessing the shop selecting module 55 through the access managing module 56. The shop selecting module 55 can supply an essential information such as the location information or the service information of the nail art shop 58_1 to 58_N to the consumer, and the consumer can access each nail art shop 58_1 to 58_N by clicking the nail art shop 58_1 to 58_N,for example. The consumer accessing the nail art shop 58_1 to 58_N can obtain a concrete information, can book for visiting or can order goods via wire or wireless communication such as an internet. The goods managing module 57 may be installed to supply goods related to the art nail to each nail art shop 58_1 to 58_N, and each nail art shop 58_1 to 58_N may order necessary goods through the goods managing module 57. The platform may manage the nail art shops 58_1 to 58_N as a membership system. Each nail art shop 58_1 to 58_N can be registered as a member in the platform for receiving various information or for being provided with the nail art goods. The platform may collect various information related to the nail art to provide to each nail art shop 58_1 to 58_N, and the platform may expose an advertisement related to each nail art shop 58_1 to 58_N to the consumer. The platform may manage the nail art shops 58_1 to 58_N in various ways, not limited to.

While one or more embodiments of the present invention have been described with reference to the figures, it will be understood by those of ordinary skill in the art that various changes in form and details may be made therein without departing from the spirit and scope of the present invention as defined by the following claims.

## Claims

1. A platform for managing a nail art, comprising:
a nail art managing server 11 for managing a process of supplying a nail art;
a supply managing group for communicating with the nail art managing server 11, for contacting a consumer directly, for selling the nail art or handling goods related to the nail art; and
a nail art supplying group for supplying the nail art to the consumer in a printable file form, supplying a printed nail art, or supplying things related to the nail art to the consumer or the shop.

2. The platform according to claim 1, wherein the nail art managing server 11 supplies a nail art paper capable of being printed, and the nail art paper may comprise a polyurethane layer and a nail art design may be printed on the paper with a general printer by the consumer.

3. The platform according to claim 1, wherein the platform comprises a location/service information module 42 for supplying an information related to each nail art shop 58_1 to 58_N.
